# EUROPÄISCHE PATENTSCHRIFT

(11) **EP 1 708 842 B1**
(45) Veröffentlichungstag und Bekanntmachung des Hinweises auf die Patenterteilung: **12.11.2008**
(21) Anmeldenummer: 05700019.2
(22) Anmeldetag: 26.01.2005
(51) Int. Cl.: B23K 9/133, B23K 9/12

(54) **SCHWEISSDRAHT-SPEICHERVORRICHTUNG**
WELDING WIRE STORAGE DEVICE
DISPOSITIF DE STOCKAGE DE FIL D'APPORT

(30) Priorität: 26.01.2004 AT 932004
(43) Veröffentlichungstag der Anmeldung: 11.10.2006
(73) Patentinhaber: Fronius International GmbH, 4643 Pettenbach (AT)
(72) Erfinder: ARTELSMAIR, Josef, A-4552 Wartberg/Krems (AT); STUMPFL, Christian, A-4715 Taufkirchen (AT)
(74) Vertreter: Sonn, Helmut
(86) Internationale Anmeldenummer: PCT/AT2005/000019
(87) Internationale Veröffentlichungsnummer: WO 2005/070607

(56) Entgegenhaltungen:
- WO-A-20/05002775
- CA-A1- 2 435 520
- DE-A1- 3 827 508
- DE-A1- 4 320 405
- SU-A1- 1 489 941

## Beschreibung

Die Erfindung betrifft eine Schweißdraht-Speichervorrichtung für eine Schweißanlage, mit einem Gehäuse, wobei eine den Schweißdraht umgebende Drahtseele in einem Freiraum des Gehäuses bogenförmig freiliegend angeordnet ist, wobei ein Ende der Drahtseele in einem Endbereich des Gehäuses fixiert ist, und wobei zum Erfassen der Auslenkung der Drahtseele ein Messmittel angeordnet ist.

Bei den neuesten Schweißtechniken, bei denen der Schweißdraht nicht mehr nur mit konstanter Geschwindigkeit in einer Richtung gefördert wird, sondern für die Zündung des Lichtbogens und/oder während des Schweißprozesses eine Vorwärts- und Rückwärtsbewegung oder unterschiedliche Fördergeschwindigkeiten des Schweißdrahtes während des Schweißprozesses durchgeführt werden, kommt der Drahtförderung eine große Bedeutung zu. Aufgrund der unterschiedlichen Fördergeschwindigkeiten bzw. Förderrichtungen des Schweißdrahtes ergibt sich bei den derzeitigen Drahtfördersystemen das Problem, dass das Ansprechverhalten der Schweißdrahtförderung sehr träge ist und somit keine optimalen Schweißergebnisse erzielt werden können. Dies resultiert daraus, dass sich aufgrund der unterschiedlichen Fördergeschwindigkeiten oder bei Wechsel der Förderrichtung des Schweißdrahtes im Drahtfördersystem zeitweise ein Überschuss an Schweißdraht ergibt, der gemäß dem Stand der Technik über das gesamte Schlauchpaket zur Drahtrolle zurück gefördert werden muss.

Beispielsweise ist aus DE 197 38 785 C2 eine Vorrichtung zum Lichtbogenschweißen mit abschmelzender Elektrode bekannt, bei der der Schweißdraht von einer Vorratstrommel über zwei Drahtvorschübe an die Schweißstelle zugeführt wird. Dabei wird ein Kurzschluss-Schweißprozess beschrieben, bei dem die Schweißdrahtförderung vor Abschluss der Tropfenbildung einen den Übergang des Tropfens unterstützende Bewegung ausführt. Beim Auftreten eines Kurzschlusses wird der Schweißdraht vom Drahtvorschub zurückgezogen und anschließend nach Erreichen eines gewissen Abstandes wieder vorwärts bewegt, wobei der Schweißdraht in einem Drahtpuffer transportiert wird. Die Ausbildung und exakte Anordnung des Drahtpuffers ist dem Dokument jedoch nicht zu entnehmen.

Aus der DE 38 27 508 A1 ist eine Transportvorrichtung bekannt, bei der der Schweißdraht auch bei ungünstigen Krafteinwirkungen mit konstanter Kraft gefördert wird und Zug- bzw. Druckspannungen vermieden werden. Der Schweißdraht wird zwischen einem schiebenden Drahtvorschub, der im Schweißgerät oder in einem Drahtvorschubgerät angeordnet ist, und einem ziehenden Drahtvorschub, der bevorzugt im Bereich des Schweißbrenners oder im Schweißbrenner selbst angeordnet ist, durch einen ausweichfähigen Teil und einen gekrümmten Schlauch geführt. Die Schlauchspannung wird von einer Feder abgestützt. Das ausweichfähige Teil ist mit einem Steuerorgan gekoppelt, welches den Ausweichweg des ausweichfähigen Teiles bei Entstehen von Druck- oder Zugspannungen am Schweißdraht misst und einer Steuerung zur Kompensierung über eine Geschwindigkeitsregelung des ersten Antriebes zuführt. Bei dieser Lösung wird aufgrund der Anordnung der Feder eine entsprechende Kraft eingestellt, mit der der Schweißdraht gefördert wird.

Eine Ausbildung eines Drahtpuffers ist aus der DE 43 20 405 C2 bekannt, bei der eine Vorrichtung zur schlupffreien Förderung eines Schweißdrahtes beschrieben ist. Dabei wird wiederum zwischen zwei Drahtvorschüben ein Drahtpuffer gebildet, wobei dieser derart aufgebaut ist, dass der Schweißdraht eine vollständige Drahtschlaufe ausbildet, bevor dieser in das Schlauchpaket eingeführt wird. Der Drahtpuffer wird also durch eine Schlaufe zwischen zwei voneinander beabstandeten Platten gebildet, deren gegenseitiger Abstand größer ist als der Durchmesser des Schweißdrahtes. Um den Füllstand des Drahtpuffers zu überwachen, ist ein Sensor angeordnet, der den Durchmesser der Schlaufe des Schweißdrahtes erfasst.

Die SU 1489941 beschreibt einen durch eine Schlaufe gebildeten Drahtpuffer gemäß dem Oberbegriff des Anspruchs 1, wobei der Schweißdraht innerhalb einer Drahtseele aus Polyamid verläuft, welche ein einem Ende fixiert und am anderen Ende frei beweglich ist. Die Drahtseele ist zwischen zwei stromführenden Platten angeordnet, welche jeweils durch eine speziell gestaltete Nut unterbrochen sind. Durch die Lage der Drahtseele wird die Kapazität zwischen den Platten beeinflusst, wordurch auf den Füllstand des Drahtspeichers rückgeschlossen werden kann. Durch die schleifende Anordnung der Drahtseele zwischen den Platten kommt es zu Reibungsverlusten, welche sich negativ auf das Ansprechverhalten des Drahtpuffers auswirken. Schließlich ist jenes Ende der Drahtseele, an welchem der Schweißdraht austritt ungeführt, wodurch ein automatisches Einfädeln des Schweißdrahtes erschwert wird.

Nachteilig ist bei den zuvor beschriebenen Systemen, dass für diese Art des Drahtpuffers ein sehr großer Platzbedarf notwendig ist, wodurch eine Anwendung nur im Bereich des Schweißgerätes bzw. des Drahtvorschubgerätes oder als Extragerät sinnvoll realisiert werden kann. Der Schweißdraht muss somit vom Drahtpuffer über das gesamte Schlauchpaket an den Schweißbrenner und wieder zurück in den Drahtpuffer gefördert werden, sodass hier große Reibungsverluste auftreten und das Ansprechverhalten der Drahtförderung nicht wesentlich verbessert wird. Diese Reibungsverluste und die große Trägheit der Drahtförderung treten deshalb auf, da bei den bekannten Verfahren zur Drahtförderung der Schweißdraht in einer Drahtseele verläuft, die in einem Führungsrohr bevorzugt im Schlauchpaket eingeschoben wird, wobei der Innendurchmesser des Führungsschlauches nur unwesentlich größer ist, als der Außendurchmesser der Drahtseele. Somit wird eine exakte Führung der Drahtseele erreicht, jedoch muss beispielsweise bei einer Förderrichtungsumkehr der Schweißdraht über die gesamte Länge der Drahtseele, also des Schlauchpaketes, zurück in den Drahtpuffer geschoben werden.

Die Aufgabe der vorliegende Erfindung besteht daher in der Schaffung einer Schweißdraht-Speichervorrichtung für eine Schweißanlage, bei der ein sehr einfacher und kompakter Aufbau geschaffen wird.

Die erfindungsgemäße Aufgabe wird dadurch gelöst, dass die Drahtseele an dem gegenüberliegenden Endbereich in einem Führungselement verschiebbar gelagert ist, und dass am Gehäuse zwei Kupplungsvorrichtungen zur Verbindung mit einem Drahtführungsschlauch für die Drahtseele angeordnet sind. Vorteilhaft ist hierbei, dass die Baugröße der Schweißdraht-Speichervorrichtung nur unwesentlich größer als der Durchmesser des Schlauchpaketes ist, wodurch die Schweißdraht-Speichervorrichtung möglichst nahe am Schweißprozes angeordnet werden kann, ohne dass dabei die Zugänglichkeit und die Beweglichkeit beeinträchtigt wird. Durch die kompakte Bauweise lässt sich die Schweißdraht-Speichervorrichtung an praktisch jeder Position der Schweißdrahtförderung platzieren bzw. einbauen, was durch die Kupplungsvorrichtungen erleichtert wird. Ein weiterer Vorteil liegt darin, dass der Schweißdraht trotz Anordnung einer Schweißdraht-Speichervorrichtung fast vollständig über die gesamte Länge der Drahtförderung in der Drahtseele verläuft, sodass eine sichere Förderung ohne große Gefahr von Ausknicken möglich ist. Somit ist ein Einsatz von weichen Schweißdrähten, wie beispielsweise Aluminium-Drähten möglich. Ein wesentlicher Vorteil liegt darin, dass durch die geringe Umlenkung des Schweißdrahtes, also dem geringen bogenförmigen Verlauf des Schweißdrahtes, ein automatisches Einfädeln des Schweißdrahtes möglich ist. Das automatische Einfädeln wird noch dadurch verbessert, dass die Drahtseele in Schweißdrahtförderrichtung zuerst in den fixierten Bereich der Drahtseele eingeschoben wird. Weiters kann das Schlauchpaket an der Schweißdraht-Speichervorrichtung fixiert werden, wodurch gleichzeitig das Schlauchpaket und die Schweißdraht-Speichervorrichtung beispielsweise an einem Balancer befestigt werden kann.

Weitere Ausbildungen sind in den Ansprüchen 2 bis 5 beschrieben. Die sich ergebenden Vorteile können aus der Beschreibung entnommen werden.

Die vorliegende Erfindung wird anhand der beigefügten Zeichnungen, welche Ausführungsbeispiele des Schweißbrenners beschreiben, näher erläutert.

Darin zeigen:
Fig. 1 eine schematische Darstellung eines Schweißgerätes;
Fig. 2 eine schaubildliche Darstellung einer Roboterschweißanlage;
Fig. 3 ein Diagramm für den Prozessablauf eines Kalt-Metall-Transfer-Schweißprozesses;
Fig. 4 eine schematische Darstellung eines Winkelspeichers;
Fig. 5 ein weiters Ausführungsbeispiels des Winkelspeichers in vereinfachter Darstellung;
Fig. 6 ein anderes Ausführungsbeispiel des Winkelspeichers; und
Fig. 7 ein Ausführungsbeispiel des Winkelspeichers mit eigens darin angeordneter Drahtseele, in vereinfachter schematischer Darstellung.

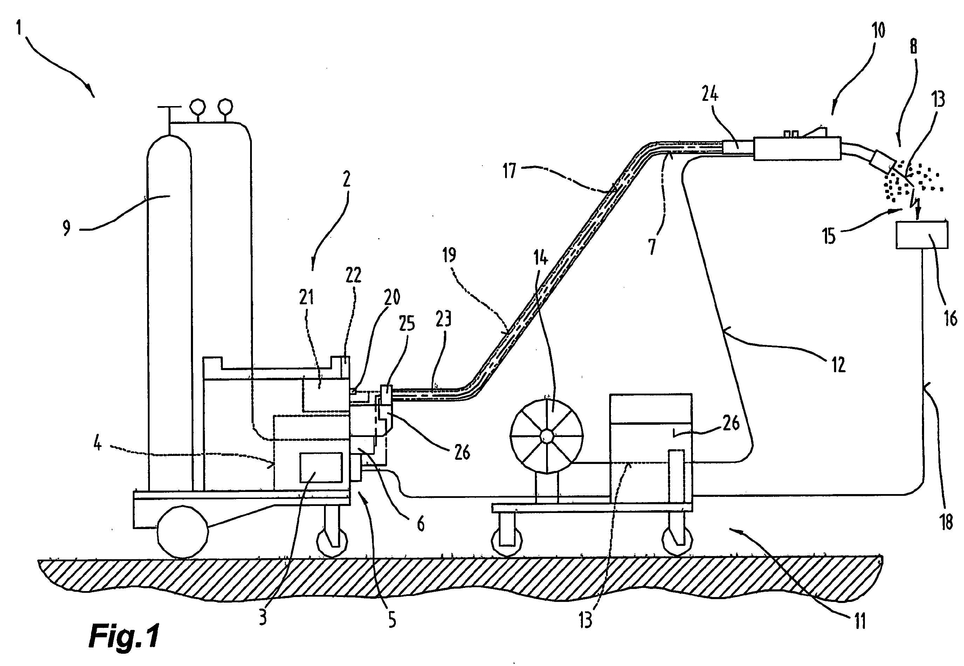

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist. Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15 zwischen der Elektrode bzw. dem Schweißdraht 13 und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. einen gebildeten Plasmastrahl für einen Prozess ein Stromkreis aufgebaut werden kann.

Zum Kühlen des Schweißbrenners 10 kann über einen Kühlkreislauf 19 der Schweißbrenner 10 beispielsweise unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgeräte 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte nicht alle zuvor benannten Komponenten verwendet bzw. eingesetzt werden müssen. Hierzu ist es beispielsweise möglich, dass der Schweißbrenner 10 als lüftgekühlter Schweißbrenner 10 ausgeführt werden kann.

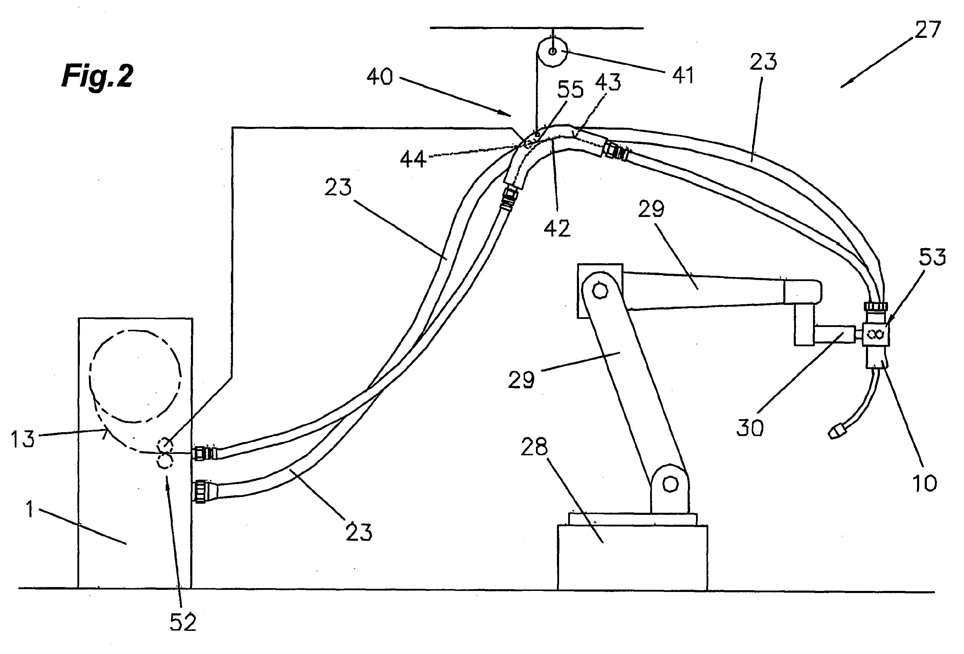

In Fig. 2 ist ein schematischer Aufbau einer Roboterschweißanlage 27 dargestellt, bei dem ein Roboter 28 drehbar gelagerte Roboterarme 29 aufweist, wobei an einem Manipulator 30 der Schweißbrenner 10 befestigt ist.

Bei derartigen Roboterschweißanlagen 27 wird des Schweißgerät 1 außerhalb des Wirkungsbereiches des Roboters 28 aufgestellt und das Schlauchpaket 23 zum Verbinden des Schweißgerätes 1 mit dem Schweißbrenner 10 so verlegt, dass es zu keinen Störungen der Bewegung des Roboters 28 durch das Schlauchpaket 23 kommt. Speziell wird beim dargestellten Ausführungsbeispiel ein Aufbau für einen Kalt-Metall-Transfer-Schweißprozess, nachfolgend als CMT-Prozess 31 bezeichnet, gezeigt.

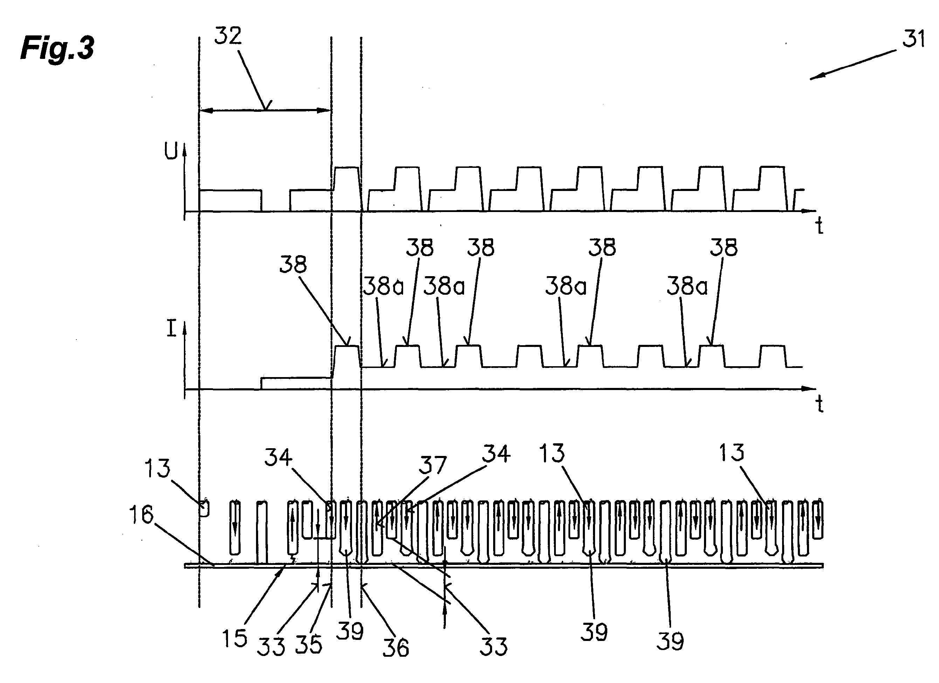

Hierzu ist in Fig. 3 ein schematischer zeitlicher Ablauf des CMT-Prozesses 31 zur Erläuterung dargestellt. Nach einer Zündphase 32 zum Generieren des Lichtbogens 15 wird der CMT-Prozess 31 vom Schweißgerät 1 bzw. der Steuervorrichtung 4 und den einzelnen Komponenten ausgeführt. Während des CMT-Prozesses 31 führt der Schweißdraht 13 von einer bestimmten Ausgangsposition, einem voreingestellten definierten Abstand 33 des Schweißdrahtes 13 bzw. des Schweißdrahtendes zum Werkstück 16 bzw. der Werkstückoberfläche, eine Bewegung in Richtung des Werkstücks 16 aus (Pfeil 34), wie dies ab einem Zeitpunkt 35 im Diagramm ersichtlich ist. Der Schweißdraht 13 wird somit bis zur Berührung mit dem Werkstück 16, also einem Kurzschluss, entsprechend dem Zeitpunkt 36 in Richtung des Werkstückes 16 gefördert. Nach Bildung des Kurzschlusses wird die Drahtförderung umgekehrt (Pfeil 37) und der Schweißdraht 13 bis zu dem vordefinierten Abstand 33, also bevorzugt wiederum in die Ausgangsposition, vom Werkstück 16 weg bewegt, worauf abermals eine Umkehr der Drahtförderung in Richtung des Werkstücks 16 entsprechend Pfeil 34 erfolgt und der Ablauf fortlaufend wiederholt wird. Um eine Materialübergabe, also eine Tropfenbildung bzw. ein Anschmelzen des Schweißdrahtendes während des Kalt-Metall-Transfer-Schweißprozesses zu erreichen, wird während der Vorwärtsbewegung des Schweißdrahtes 13 in Richtung des Werkstückes 16 gemäß Pfeil 34 der Schweißstrom 38 gegenüber einem Grundstrom 38a, der zur Aufrechterhaltung des Lichtbogens 15 ohne wesentliche Anschmelzung des Schweißdrahtes 13 definiert ist, verändert, insbesondere erhöht. Somit wird der Schweißstrom 38 derart geregelt, dass bei der Vorwärtsbewegung entsprechend Pfeil 34 eine Anschmelzung des Schweißdrahtes 13 stattfindet, also ein Tropfen 39 gebildet wird. Aufgrund des Eintauchens des Schweißdrahtes 13 in das Schmelzbad (nicht dargestellt) bzw. des Kurzschlusses und der darauf folgenden Rückwärtsbewegung des Schweißdrahtes 13 entsprechend Pfeil 37 wird der gebildete Tropfen 39 bzw. das angeschmolzene Material vom Schweißdraht 13 abgelöst, ohne dass dabei eine Erhöhung des Schweißstromes 38 durchgeführt wird. Bei der Bildung des Kurzschlusses wird die Stromquelle also derart geregelt, dass kein starker Stromanstieg des Schweißstromes 38 zur Lösung des Kurzschlusses, wie bei einer aus dem Stand der Technik üblichen Schweißstromquelle bekannt, durchgeführt wird, sodass ein möglichst kalter Schweißprozess gebildet wird. Dabei kann zur Unterstützung der Tropfenablöse auch eine impulzartige Erhöhung des Schweißstromes 38 (nicht dargestellt) durchgeführt oder beim Auftreten des Kurzschlusses bzw. in der Kurzschlussphase der Schweißstrom 38 abgesenkt bzw. die Stromquelle deaktiviert werden, sodass bei der Rückwärtsbewegung der Tropfen 39 vom Schweißdraht 13 gezogen wird und die Wärmeeinbringung in das Werkstück 16 möglichst gering gehalten werden kann.

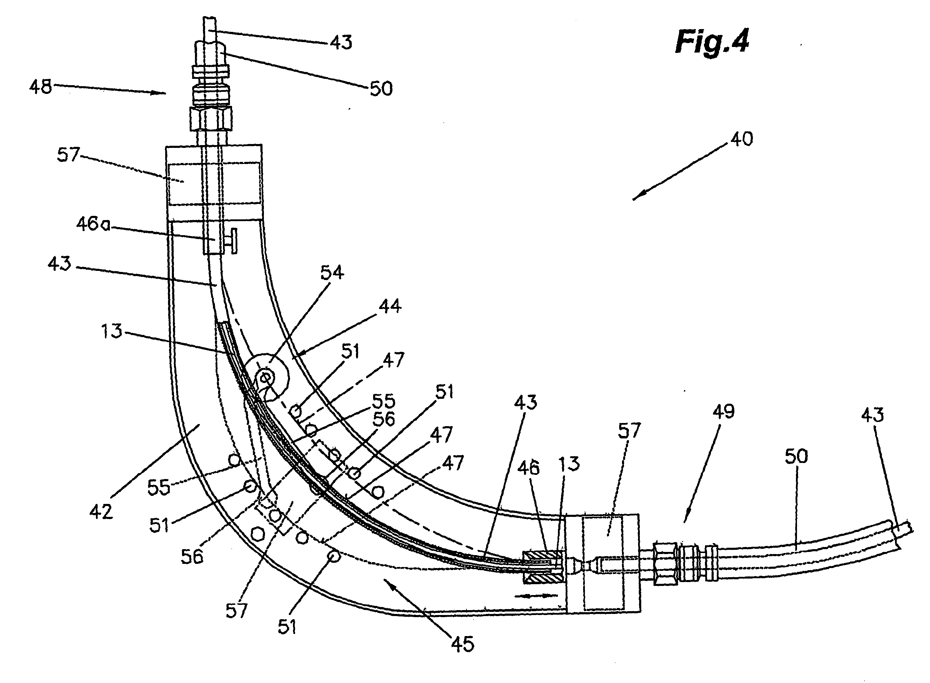

Durch den speziellen Ablauf des CMT-Prozesses 31, also aufgrund der Vor- und Rückbewegung des Schweißdrahtes 13, und zur sicheren Prozessdurchführung aufgrund der unterschiedlichen Schweißdrahtförderrichtungen, ist gemäß Fig. 4 eine Schweißdraht-Speichervorrichtung, insbesondere in Form eines erfindungsgemäßen Winkelspeichers 40, zur Aufnahme überschüssigen Schweißdrahtes 13 in der Drahtförderung angeordnet. Beispielsweise ist es möglich, den Winkelspeicher 40 an eine vom Roboter 28 distanzierte Haltevorrichtung, wie beispielsweise einen Balancer 41, zu befestigen, wie schematisch in Fig. 2 dargestellt. Selbstverständlich ist es möglich, den Winkelspeicher 40 am Roboter 28, insbesondere an einem Roboterarm 29, zu positionieren.

Der Winkelspeicher 40 hat die Aufgabe den im Schweißdrahtfördersystem überschüssigen Schweißdraht 13 aufzunehmen, sodass beispielsweise bei einer Rückwärtsbewegung der Schweißdraht 13 nicht mehr durch das ganze Schlauchpaket 23 bzw. das Drahtfördersystem geschoben werden muss, sondern dieser überschüssige Schweißdraht 13 nur bis in den Winkelspeicher 40 zurückgefördert werden muss, um dann dort entsprechend zwischengespeichert bzw. gepuffert zu werden, bis eine Weiterförderung durchgeführt wird. Damit werden die Reibungsverluste verringert und es wird ein sehr gutes Ansprechverhalten bei einer Richtungsumkehr der Schweißdrahtförderung erzielt. Durch die spezielle kompakte Bauweise ist es möglich, dass der Winkelspeicher 40 möglichst nahe am Schweißprozess, also in der Nähe des Schweißbrenners 10, angeordnet und somit eine relativ kurze Förderstrecke zwischen dem Winkelspeicher 40 und dem Schweißbrenner 10 gebildet werden kann.

Die Schweißdraht-Speichervorrichtung, insbesondere der Winkelspeicher 40, weist ein Gehäuse 42 bzw. zumindest eine Grundplatte auf, wobei eine den Schweißdraht 13 führende Drahtseele 43 freiliegend angeordnet und ein Messmittel 44 zum Erfassen der Bewegung bzw. der Auslenkung der Drahtseele 43 angeordnet ist. Speziell ist die den Schweißdraht 13 umgebende Drahtseele 43 in einem Freiraum 45 bogenförmig ungeführt angeordnet, wobei die Drahtseele 43 in einem Endbereich des Gehäuses 42 bzw. der Grundplatte fixiert ist und an dem gegenüberliegenden Endbereich in einem Führungselement 46 verschiebbar gelagert ist. Dabei kann das Führungselement 46 durch ein einfaches Gleitrohr gebildet werden, in dem sich die Drahtseele 43 in Längsrichtung frei bewegen kann, wie durch den Doppelpfeil schematisch angedeutet wird. Die Fixierung der Drahtseele 43 kann in einfacher Art durch ein Klemmsystem bzw. eine Schraubverbindung erfolgen, wie dies schematisch dargestellt ist, wobei hierzu die Drahtseele 43 beispielsweise durch ein weiteres Führungselement 46a geführt wird und in dieses eine Scheibe zum Fixieren bzw. Klemmen der Drahtseele 43 eingesetzt ist. Selbstverständlich kann der Schweißdraht 13 im Winkelspeicher 40 ohne Drahtseele 43 verlaufen, wobei dieser dann ebenfalls einen bogenförmigen Verlauf ausbildet. Durch den bogenförmigen Verlauf der Drahtseele 43 bzw. des freilaufenden Schweißdrahtes 13 wird erreicht, dass eine Vorzugsrichtung für die Auslenkbewegung vorgegeben bzw. definiert wird und somit durch eine entsprechende Vergrößerung oder Verkleinerung eines Radius 47 des bogenförmigen Verlaufes der Drahtseele 43 mehr oder weniger Schweißdraht 13 im Winkelspeicher 40 aufgenommen werden kann. Bei kleinerem Radius 47, wie strichliert in Fig. 4 dargestellt, befindet sich mehr Schweißdraht 13 im Winkelspeicher 40, als bei größerem Radius 47, entsprechend der strich punktierten Linie in Fig. 4. Während des Schweißprozesses kann durch Vergrößerung oder Verkleinerung des Radius 47 die Schweißdrahtmenge entsprechend geregelt werden. Weiters wird durch den bogenförmigen Verlauf erreicht, dass bereits eine Vorkrümmung der Drahtseele 43 gegeben ist, sodass der Widerstand für die Radiusänderungen verringert wird und somit möglichst wenig Kraft zur Änderung des Radius 47 benötigt wird.

Bevorzugt sind an dem Gehäuse 42 des Winkelspeichers 40, insbesondere in den Endbereichen, zwei Kupplungsvorrichtungen 48, 49 angeordnet, wobei zwischen den Kupplungsvorrichtungen 48, 49 die den Schweißdraht 13 führende Drahtseele 43 oder der Schweißdraht 13 selbst freiliegend bzw. ungeführt angeordnet ist, sodass sich der Schweißdraht 13 bzw. die Drahtseele 43 innerhalb des Freiraumes 45 mit geringem Widerstand verformen kann. Die Kupplungsvorrichtungen 48, 49 sind in Form eines Schnellverschlusses ausgebildet. Mit den Kupplungsvorrichtungen 48, 49 kann ein Drahtführungsschlauch 50 für die Drahtseele 43 und den Schweißdraht 13 gekuppelt werden. Beim gezeigten Ausführungsbeispiel wird der Schweißdraht 13 unabhängig vom Schlauchpaket 23 über einen eigenen Drahtführungsschlauch 50 vom Schweißgerät 1 zum Winkelspeicher 40 und von diesem zum Schweißbrenner 10 geführt. Dies hat den Vorteil, dass damit das Schlauchpaket 23 mit den restlichen Leitungen direkt ohne Unterbrechung vom Schweißgerät 1 zum Schweißbrenner 10 verlaufen kann, wie aus Fig. 2 ersichtlich, wogegen in der Drahtförderung der Winkelspeicher 40 eingebaut ist.

Um eine Begrenzung der Auslenkung der Drahtseele 43 mit dem darin verlaufenden Schweißdraht 13, also der Aufnahmekapazität des Winkelspeichers 40, zu erreichen, können im Gehäuse 42 des Winkelspeichers 40 Begrenzungselemente 51 angeordnet sein. Zumindest sind diese für die maximale Auslenkung der Drahtseele 43 vorteilhaft, da es sonst passieren kann, dass bei zu großer Auslenkung, also zu kleinem Radius 47, die Drahtseele 43 aus dem Führungselement 46 herausgeschoben wird, sodass die Funktion des Winkelspeichers 40 nicht mehr einwandfrei gegeben ist. Selbstverständlich ist es möglich derartige Begrenzungselemente 51 auch für die minimale Auslenkung der Drahtseele 43 anzuordnen. Hierzu ist es vorteilhaft, dass die Drahtseele 43 in einer Richtung geführt ist, um ein Ausknicken oder Auslenken der Drahtseele 43 bzw. des Schweißdrahtes 13 zu verhindern. Dazu ist es möglich, dass beispielsweise zwei Führungsplatten parallel zueinander angeordnet sind, zwischen denen die Drahtseele 43 freiliegend angeordnet ist, sodass nunmehr nur in einer Richtung die Auslenkbewegung erfolgen kann. Dabei sind die beiden Führungsplatten so nahe zueinander angeordnet, dass die Drahtseele 43 dazwischen passt und kaum eine Auslenkung in Richtung der Führungsplatten ermöglicht wird.

Damit eine Regelung bzw. Steuerung des Füllstandes im Winkelspeicher 40 durchgeführt werden kann, ist das Messmittel 44 angeordnet. Dieses Messmittel 44 ist bevorzugt mit der Steuervorrichtung 4 oder direkt mit einer Antriebseinheit 52 im Schweißgerät 1, wie schematisch in Fig. 2 dargestellt, verbunden, wogegen die weitere im Schweißbrenner 10 angeordnete Antriebseinheit 53 unabhängig betrieben werden kann. In diesem Fall führt die Antriebseinheit 53 im Schweißbrenner 10 die Schweißdrahtförderung, insbesondere die Vor-/Rückwärtsbewegung des Schweißdrahtes 13 für den CTM-Prozess 31 unabhängig von der weiteren Antriebseinheit 52 im Schweißgerät 1 durch, wobei die Regelung von der weiteren Antriebseinheit 52 im Schweißgerät 1 entsprechend dem Füllstand des Winkelspeichers 40 erfolgt. Somit wird eine sehr schnelle Reaktionszeit für die Schweißdrahtförderung erzielt, da die Antriebseinheit 53 im Schweißbrenner 10 auf keinerlei Steuer- und/oder Regelabläufe für die weitere Antriebseinheit 52 im Schweißgerät 1 Rücksicht nehmen braucht und somit die Prozesssicherheit wesentlich verbessert wird. Durch diese getrennten Abläufe bei der Schweißdrahtförderung sind somit die beiden Antriebseinheiten 52, 53 voneinander entkoppelt.

Um den Füllstand des Winkelspeichers 40 erfassen zu können, ist beim dargestellten Ausführungsbeispiel das Messmittel 44 beispielsweise als Winkelsensor 54, beispielsweise ein Inkrementalgeber, ein Potentiometer oder dgl., ausgebildet, der über einen Hebel 55 und eine drehbar gelagerte Klemme 56, einem sogenannten "Seelenclip" mit der Drahtseele 43 verbunden ist. Somit kann bei einer Änderung des Radius 47 der bogenförmig verlaufenden Drahtseele 43, wie schematisch mit strichlierten und strich punktierten Linien in Fig. 4 eingezeichnet, diese Änderung erfasst werden, worauf eine entsprechende Umsetzung der Impulse bzw. eine Berechnung des Füllstandes erfolgt. Anschließend kann die Fördergeschwindigkeit der Antriebseinheit 52 im Schweißgerät 1 verringert oder vergrößert werden, um den Füllstand im Winkelspeicher 40 auf einen vorgegebenen Sollwert zu regeln. Hierbei kann die Regelung des Füllstandes im Winkelspeicher 40 auf die unterschiedlichsten Arten erfolgen.

Beispielsweise kann eine relative Drehzahl-Korrekturregelung mit Start- und Stopp-Signalen durchgeführt werden. Hierzu werden die Antriebseinheiten 52 und 53 über ein Start-Signal auf einen vorgegebenen Drehzahlsollwert gestartet, sodass der Schweißdraht 13 bei gezündetem Lichtbogen 15 in Richtung des Werkstückes 16 gefördert wird. Dabei werden Abweichungen bzw. Drifts zwischen den Antriebseinheiten 52, 53 vom Winkelspeicher 40 detektiert. Das Messmittel 44, insbesondere der Winkelsensor 54, erfasst den Radius 47 der Drahtseele 43 und je nach Änderung wird eine entsprechende Steuerung bzw. Regelung durchgeführt. Wird der Puffer gefüllt, also der Radius 47 der Drahtseele 43 kleiner, so erfolgt eine Drehzahlverminderung des so genannten Slave-Antriebes, insbesondere der Antriebseinheit 52 im Schweißgerät 1. Gibt hingegen das Messmittel 44 eine Verringerrung des Puffers, also eine Vergößerung des Radius 47 wieder, so erfolgt eine Drehzahlerhöhung des Slave-Antriebes. Durch diese Art der Regelung wird eine ständige Ausregelung der Abweichung durchgeführt, wobei jedoch der Master-Antrieb, insbesondere die Antriebseinheit 53 im Schweißbrenner 10, eigenständig, also ohne Berücksichtigung des Verhaltens des Slave-Antriebes bzw. des Pufferfüllstandes, die Drahtförderung während des Schweißprozesses durchführt. Damit ist es auch möglich, dass anstelle einer kontinuierlichen Vorwärtsförderung des Schweißdrahtes 13 auch eine pulsierende oder eine Vor-/Rückwärtsförderung des Schweißdrahtes 13 vom Master-Antrieb, insbesondere von der Antriebseinheit 53 im Schweißbrenner 13, durchgeführt wird.

Weiters ist es mit der Anordnung des Winkelspeichers 40 möglich, dass für die Drahtförderung eine Schlupferkennung bzw. eine Drahtförderüberwachung der Antriebseinheiten 52, 53 durchgeführt wird. Hierzu wird für die Drahtförderung ein Regelfenster für den Slave-Antrieb, also der Antriebseinheit 52 im Schweißgerät 1, definiert. Dabei kann das Regelfenster automatisch von der Steuervorrichtung 4 entsprechend der gewünschten Sollregelgeschwindigkeit festgelegt bzw. berechnet werden oder der Benutzer legt ein entsprechendes Regelfenster fest. Beispielsweise erfolgt der Ablauf derartig, dass eine Sollregelgeschwindigkeit von 10 m/min für den Master-Antrieb, also der Antriebseinheit 53 im Schweißbrenner 19, eingestellt wird, wobei von der Steuervorrichtung 4 das Regelfenster für den Slave-Antrieb beispielsweise von 8 m/min bis 12 m/min festgelegt wird. Somit erfolgt nur in diesem Bereich eine Ausregelung des Slave-Antriebes, d.h., dass der Master-Antrieb mit der vorgegebenen Sollregelgeschwindigkeit von beispielsweise 10 m/min arbeitet und der Slave-Antrieb nicht über diese Grenzwerte zwischen 8 m/min und 12 m/min für die Zufuhr des Schweißdrahtes 13 geregelt wird. Damit nunmehr eine Schlupferkennung bzw. Schweißdraht-Förderüberwachung durchgeführt wird, ist es lediglich notwendig, den Füllstand des Winkelspeichers 40 zu überwachen und auszuwerten. Füllt sich nämlich der Puffer bzw. entleert sich dieser, so liegt ein Fehler bei der Drahtförderung vor, da aufgrund der Erhöhung bzw. Verringerung der Drahtfördergeschwindigkeit des Slave-Antriebes keine Rückführung des Füllstandes auf einen vorgegebenen Pufferzustand mehr möglich ist.

Ist der Puffer beispielsweise für eine gewisse Zeit, z.B. 0,5 s, voll und die Drahtfördergeschwindigkeit des Slave-Antriebes bereits auf Minimum gefahren, so wird die Drahtförderung gestoppt, da die Steuervorrichtung 4 bzw. eine Auswertevorrichtung daraus schließen kann, dass im Bereich des Schweißbrenners 10 bei der Drahtförderung ein Problem, insbesondere ein Festbrennen des Schweißdrahtes 13 oder ein Schlupf bei den Antriebsrollen der Antriebseinheit 53, auftritt. Tritt andererseits der Fall ein, dass der Puffer über eine gewisse Zeit leer ist und die Drahtfördergeschwindigkeit des Slave-Antriebes bereits auf Maximum gesetzt ist, so wird die Drahtförderung bzw. die Anlage wiederum gestoppt, da nunmehr ein Problem bei der weiteren Antriebseinheit 52 auftritt. Somit kann aufgrund der Fensterregelung eine zusätzliche Überwachung der Antriebseinheiten 52, 53 ohne zusätzliche Komponenten durchgeführt werden, wobei gleichzeitig eine Zuordnung der Fehlerquelle getroffen werden kann.

Es ist aber auch möglich, dass eine Regelung bzw. Steuerung der absoluten Drehzahl ohne Start-Stopp-Signale durchgeführt wird. Hierbei wird je nach Pufferwert, also Füllstand des Winkelspeichers 40, die Drehzahl der Antriebseinheit 52 im Schweißgerät 1 geregelt. Dabei wird im einfachsten Fall bei dem Zustand "Puffer voll" die Antriebseinheit 52 gestoppt, wogegen beim Zustand "Puffer leer" die Antriebseinheit 52 auf maximal mögliche Drehzahl geregelt wird. Somit wird eine lineare Regelkennlinie erreicht, wobei je nach Zustand des Puffers eine entsprechende Ansteuerung der Antriebseinheit 52 durchgeführt wird. Bei dieser Art der Regelung ist es bei der Inbetriebnahme der Anlage nicht notwendig die beiden Antriebseinheiten 52, 53 gleichzeitig über ein Start- oder Stopp-Signal anzusteuern. Auch ist es nicht notwendig, dass für den Füllstand des Puffers ein Sollwert benötigt wird, da eine ständige Regelung durchgeführt wird.

Möglich ist auch eine Positionsregelung ohne Start-Stopp-Signale, bei der unabhängig von der Solldrehzahl ein eingestellter bzw. vordefinierter Pufferwert, insbesondere eine Mittelstellung, ausgeregelt wird, wobei hierzu die Antriebseinheit 52 die Ausregelung des Pufferzustandes durchführt und die Antriebseinheit 53 unabhängig davon die Schweißdrahtförderung für den Schweißprozess ausführt.

Beispielsweise ist es auch möglich, dass das Nachregeln des Füllstandes vom Schweißgerät 1 aus erst nach Ablauf einer gewissen Zeitdauer der Änderung des Füllstandes durchgeführt wird, sodass keine ständige Anpassung bzw. Annäherung durchgeführt werden muss. Dies ist insofern möglich, da im Winkelspeicher 40 je nach Dimensionierung kurzzeitig überschüssiger Schweißdraht 13 aufgenommen bzw. kurzzeitig mehr Schweißdraht 13 entnommen werden kann als zugeführt wird. Wesentlich ist nur, dass die Antriebseinheit 53 im Schweißbrenner 10 unabhängig von der Antriebsvorrichtung 52 im Schweißgerät 1 betrieben wird, da dadurch ein optimaler und sicherer Betrieb beispielsweise des CMT-Prozesses 31 durchgeführt werden kann.

Um definierte Ausgangssituationen bei Start der Schweißanlage zu schaffen, kann ein Anfangs- und/oder End-Pufferwert eingestellt werden, sodass vor oder nach jedem Schweißvorgang eine entsprechende Ausregelung erfolgt. Beispielsweise ist es vorteilhaft, dass der Puffer, insbesondere der Füllstand des Winkelspeichers 40, nach jeder Schweißung aufgefüllt wird, sodass für einen neuerlichen Schweißvorgang genügend Schweißdraht 13 zur Verfügung steht, der nicht erst vom Drahtvorrat, also von der Vorratstrommel 14, zum Schweißbrenner 10 gefördert werden muss, sondern vom Winkelspeicher 40 schnell zur Verfügung gestellt wird.

Weiters ist es vorteilhaft, dass beim Einfädeln des Schweißdrahtes 13 der Winkelspeicher 40 entweder versperrt oder ausgeblendet wird, d.h., dass beim Versperren eine mechanische Klemmvorrichtung eingesetzt wird, bei der das lose Ende der Drahtseele 43 zum Einfädeln fixiert werden kann, wogegen beim Ausblenden dies in einfacher Form softwaretechnisch erfolgt. Die Regelung des Winkelspeichers 40 wird erst nach dem Einfädelvorgang aktiviert.

Es ist auch möglich, dass der Winkelspeicher 43 nach dem Einschalten der Schweißanlage durch entsprechende Ansteuerung der Antriebseinheiten 52, 53 vermessen wird. Dies kann beispielsweise derart erfolgen, dass von einer Antriebseinheit 52, 53, insbesondere der Antriebseinheit 52, der Winkelspeicher 40 zuerst entleert und gefüllt wird. Dabei kann die Feststellung des Zustandes über den Motorstrom festgestellt werden, d.h., dass der Motorstrom von der Antriebseinheit 52 überwacht wird, sodass beim Erreichen einer bestimmten Höhe und der bekannten Förderung festgestellt werden kann, dass der Puffer gefüllt bzw. entleert ist. Durch ein derartiges Vorgehen kann als Messmittel 44 ein Inkrementalgeber eingesetzt werden, wobei hierzu ein Abgleich durchgeführt werden muss und somit die Position bzw. die Ausregelmöglichkeiten automatisch definiert werden.

Weiters ist aus dem dargestellten Ausführungsbeispiel in Fig. 4 ersichtlich, dass an dem Gehäuse 42 ein Befestigungselement 57 angeordnet ist, an dem das Schlauchpaket 23 befestigt ist. In einfacher Form kann das Befestigungselement 57 beispielsweise als Schelle ausgebildet werden, in der das Schlauchpaket 23 gehalten wird. Dieses Befestigungselement 57 ist beispielsweise an der gegenüberliegenden Seite des Gehäuses 42 mit dem Freiraum 45, in der die Drahtseele 43 verläuft, angeordnet. Damit wird erreicht, dass das Schlauchpaket 23 auf der Rückseite des Gehäuses 42 befestigt ist und somit an der Vorderseite ein freier Zugang geschaffen wird. Weiters wird dadurch ein kompakter Aufbau der Schweißdraht-Speichervorrichtung und eine kompakte Verbindung des Schlauchpakets 23 mit dem Drahtführungsschlauch 50 erreicht.

Beim dargestellten Ausführungsbeispiel ist die Drahtseele 43 zum Führen des Schweißdrahtes 13 aus zwei Teilstücken zusammengesetzt, also nur ein einziges Mal unterbrochen. Dabei erstreckt sich die Drahtseele 43 vom Schweißgerät 1 bis in den Winkelspeicher 40, es führt die Drahtseele 43 direkt vom Schweißgerät 1 bis in das Führungselement 46, in welchem sie endet. Hierzu wird im Eintrittsbereich des Winkelspeichers 40 die Drahtseele 43, wie bereits zuvor erwähnt, fixiert, wogegen das freiliegende Ende der Drahtseele 43 in dem Führungselement 46 verschiebbar angeordnet ist. Im Winkelspeicher 40 ist anschließend beispielsweise ein Übergangsstück, wie schematisch angedeutet, in dem der Schweißdraht 13 zur anschließenden weiteren Drahtseele 43 geführt wird, wobei sich diese Drahtseele 43 nun bis in den Schweißbrenner 10 erstreckt. Somit kann der Schweißdraht 13 automatisch eingefädelt werden.

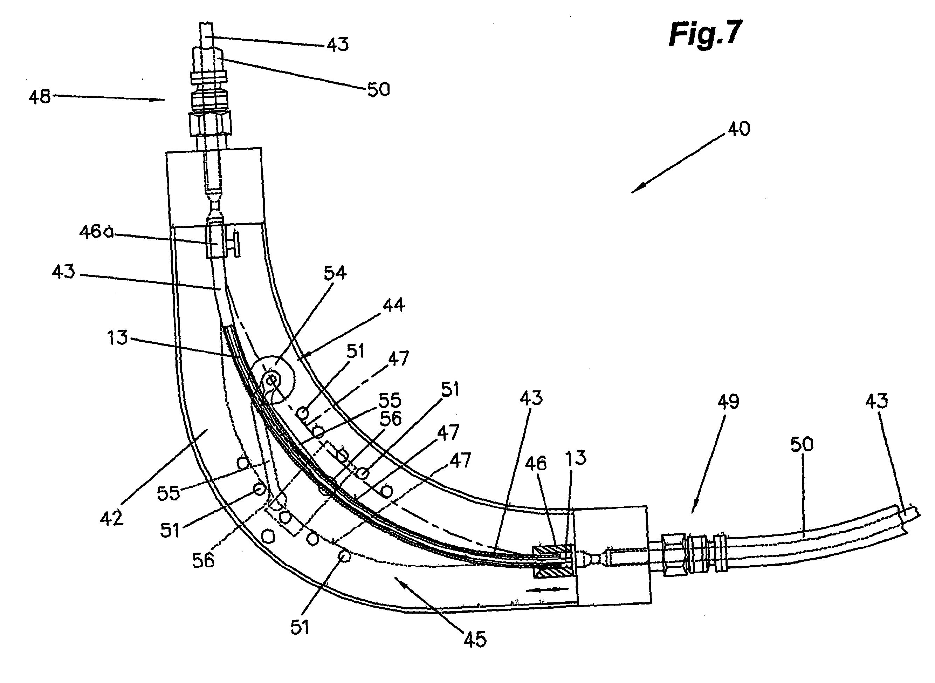

Es ist auch möglich, dass die Drahtseele 43 aus drei oder mehreren Teilen besteht, wobei für jeden Abschnitt, also die Verbindung Schweißgerät 1 zum Winkelspeicher 40, im Winkelspeicher 40 selbst und vom Winkelspeicher 40 bis Schweißbrenner 10 eine eigene Drahtseele 43 angeordnet ist, wie dies in Fig. 7 dargestellt ist.

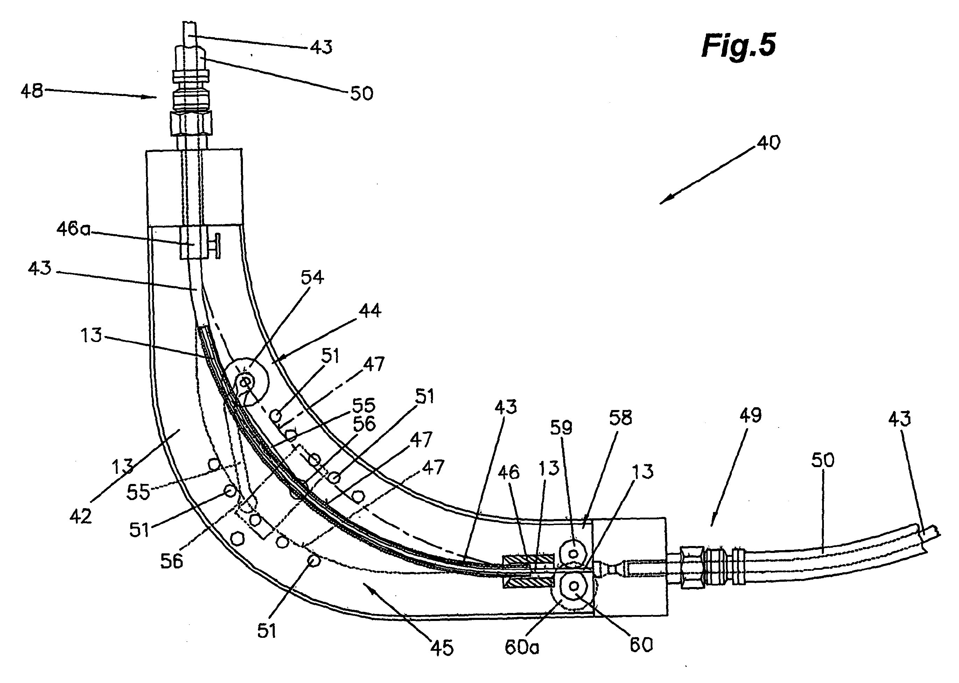

In Fig. 5 ist ein weiteres Ausführungsbeispiel des Winkelspeichers 40 beschrieben. Hierbei ist im Winkelspeicher 40 ein Drahtistwert-Messsystem 58 zur Erfassung des Istwertes der Drahtfördergeschwindigkeit eingebaut. Bevorzugt wird dieses Drahtistwert-Messsystem 58 zwischen dem Führungselement 46 und der Kupplungsvorrichtung 49 angeordnet, da dadurch keinerlei Einschränkungen für die Drahtseelenbewegung gegeben ist. Das Drahtistwert-Messsystem 58 kann in einfacher Form derart aufgebaut werden, dass beispielsweise zwei Rollen 59, 60 angeordnet werden, wobei der Schweißdraht 13 ohne Drahtseele 43 zwischen diesen Rollen 59, 60 gefördert wird. Die Rollen 59, 60 üben dabei einen definierten Druck auf den Schweißdraht 13 aus, sodass bei einem Schweißdrahttransport die Rollen 59, 60 über den Schweißdraht 13 mitbewegt werden. Mit den Rollen 59, 60 bzw. mit zumindest einer Rolle 59 oder 60 ist ein Geber 60a verbunden, wodurch Impulse bzw. Signale erzeugt werden, d.h., dass durch die Förderung des Schweißdrahtes 13 über die Antriebseinheiten 52, 53 die Rollen 59, 60 vom Schweißdraht 13 mitbewegt werden, sodass aufgrund des daran gekoppelten Gebers 60a eine Auswertung, insbesondere in Bezug auf die Geschwindigkeit, der Förderrichtung und ob überhaupt eine Förderung durchgeführt wird, erfolgen kann. Damit ist es anschließend möglich, dass von der Steuervorrichtung 4 oder einer eigenständigen Steuervorrichtung, die beispielsweise im Winkelspeicher 40 integriert sein kann, die Schweißdraht-Ist-Geschwindigkeit und/oder die Förderrichtung zu berechnen bzw. zu ermitteln. Eine derartige Drahtistwert-Messung kann bei einer Schweißanlage aufgrund von Platzmangel meist nur im Schweißgerät 1 bzw. im Drahtvorschubgerät 11 durchgeführt werden, wobei hierbei meist keinerlei Rückschlüsse auf die Schweißdrahtbewegung im Bereich des Schweißbrenners 10 bzw. innerhalb des Schweißdrahtfördersystems aufgrund der weiten bzw. langen Distanz gemacht werden kann. Da der Winkelspeicher 40 möglichst nahe im Bereich des Schweißbrenners 10 angeordnet ist und im Gehäuse bzw. auf der Grundplatte 42 ausreichend Platz vorhanden ist, ist ein derartiger Einsatz mit geringem Aufwand leicht zu realisierten. Selbstverständlich ist es auch möglich, die Drahtistwert-Messung auf andere Arten durchzuführen, beispielsweise mit einem berührungslosen Messsystem, wobei hierzu lediglich entsprechende bauliche Anpassungen vorgenommen werden müssen.

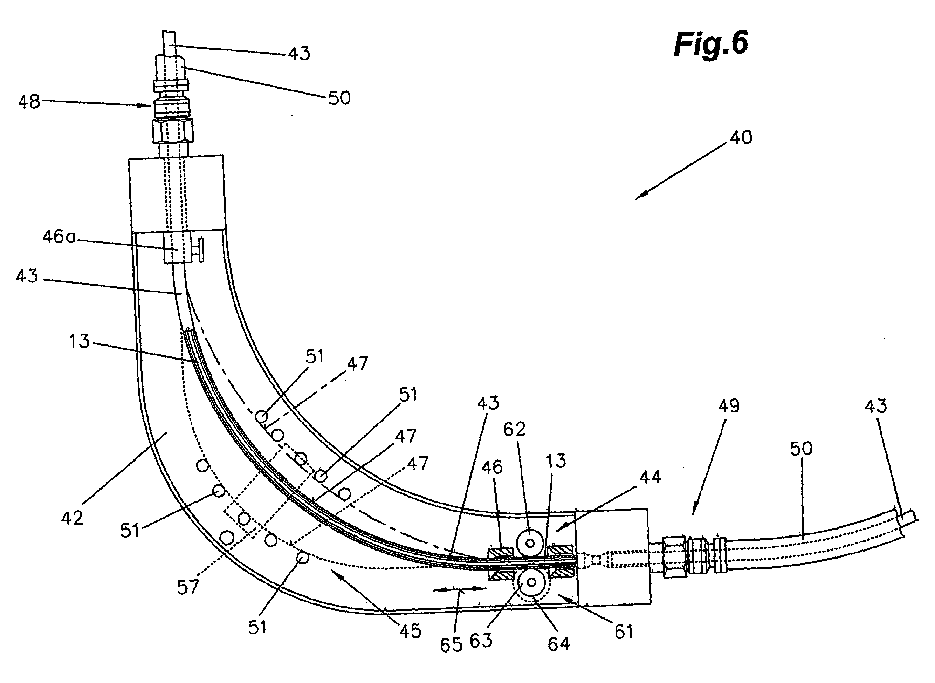

Weiters ist in Fig. 6 ein Ausführungsbeispiel gezeigt, bei dem ein neuartiges Drahtseelen-Bewegungserkennungssystem 61 eingesetzt wird.

Das Drahtseelen-Bewegungserkennungssytem 61 wird derart gebildet, dass die Drahtseele 43 zwischen zwei federnd gelagerten Drehrollen 62, 63 angeordnet wird, wobei die Drehrollen 62, 63 mit einem definierten Druck auf die Drahtseele 43 gepresst wird. Gleichzeitig sind die Drehrollen 62, 63 mit einer Auswerteeinheit 64 gekoppelt, sodass die Drehbewegung der Drehrollen 62, 63 erfasst werden. Über die Auswerteeinheit 64 kann somit die Drehbewegung der Drehrollen 62, 63 in eine Weglängenänderung umgerechnet werden. Ändert sich nunmehr der Radius der bogenförmig verlaufendenden Drahtseele 43, so führt der Endbereich der Drahtseele 43 eine Längsbewegung, gemäß Pfeil 65, aus, wodurch die Drehrollen 62, 63 mitbewegt werden und aufgrund der Verstellung der Drehrollen 62, 63 über die Auswerteeinheit 64 die Längsbewegung bzw. Längsverschiebung der Drahtseele 43 ermittelt wird. Damit kann nunmehr auf den Speicherinhalt im Winkelspeicher 40 rückgeschlossen werden, sodass eine Steuereingriff, falls erforderlich, in die Drahtförderung zur Ausregelung auf einen vorgegebenen Sollwert durchgeführt werden kann.

Die Erfassung der Drehbewegung der Drehrollen 62, 63 kann dabei durch alle aus dem Stand der Technik bekannten Systeme, wie beispielsweise ein Potentiometer, einen Inkrementalgeber, usw., durchgeführt werden, wobei die Auswertung der Bewegung bevorzugt über eine Steuervorrichtung, wie beispielsweise einer Mikroprozessorsteuerung, durchgeführt wird. Selbstverständlich ist es möglich, dass das Drahtseelen-Bewegungserkennungssystem 61 eine eigene Steuervorrichtung (nicht dargestellt) aufweist oder dass von der Steuervorrichtung 4 des Schweißgerätes 1 die Auswertung durchgeführt wird.

Weiters ist es möglich, dass das Schlauchpaket 23 direkt an den Winkelspeicher 40, also an eine entsprechend ausgebildete Kupplungsvorrichtung 48, 49, gekoppelt wird, worauf anschließend im Winkelspeicher 40 die einzelnen Leitungen aufgeteilt werden. Dabei verläuft der Schweißdraht 13 über die Drahtseele 43 im Freiraum 45, wogegen die weiteren Leitungen, wie beispielsweise das Schweißstromkabel, die Kühlleitungen, die Gasversorgungsleitungen usw. um den Freiraum 45 geführt werden. Bei einer derartigen Lösung erfolgt im Winkelspeicher 40 sozusagen eine Aufteilung des Schlauchpakets 23.

## Patentansprüche

1. Schweißdraht-Speichervorrichtung für eine Schweißanlage, mit einem Gehäuse (42), wobei eine den Schweißdraht (13) umgebende Drahtseele (43) in einem Freiraum (45) des Gehäuses (42) bogenförmig freiliegend angeordnet ist, wobei ein Ende der Drahtseele (43) in einem Endbereich des Gehäuses (42) fixiert ist, und wobei zum Erfassen der Auslenkung der Drahtseele (43) ein Messmittel (44) angeordnet ist, **dadurch gekennzeichnet, dass** die Drahtseele (43) an dem gegenüberliegenden Endbereich in einem Führungselement (46) verschiebbar gelagert ist, und dass am Gehäuse (42) zwei Kupplungsvorrichtungen (48, 49) zur Verbindung mit einem Drahtführungsschlauch (50) für die Drahtseele (43) angeordnet sind.

2. Schweißdraht-Speichervorrichtung nach Anspruch 1, **dadurch gekennzeichnet, dass** die Kupplungsvorrichtungen (48, 49) in Form eines Schnellverschlusses ausgebildet sind.

3. Schweißdraht-Speichervorrichtung nach Anspruch 1 oder 2, **dadurch gekennzeichnet, dass** im Gehäuse (42) Elemente (51) zur Begrenzung der maximalen Auslenkung der Drahtseele (43) angeordnet sind.

4. Schweißdraht-Speichervorrichtung nach einem der Ansprüche 1 bis 3, **dadurch gekennzeichnet, dass** an der gegenüberliegenden Seite des Freiraumes (45) des Gehäuses (42) ein Element (57) zum Befestigen des Schlauchpakets (23) angeordnet ist.

5. Schweißdraht-Speichervorrichtung nach einem der Ansprüche 1 bis 4, **dadurch gekennzeichnet, dass** das Gehäuse (42) zwischen einem Schweißgerät (1) oder einer Drahtfördervorrichtung (11) und einem Schweißbrenner (10) angeordnet ist, wobei das Schlauchpaket (23) direkt ohne Auftrennung zwischen dem Schweißgerät (1) oder der Drahtfördervorrichtung (11) und dem Schweißbrenner (10) angeordnet ist und wobei die Drahtseele (43) im Gehäuse (42) aufgetrennt ist.

## Claims

1. A welding wire storage device for a welding system, including a housing (42) with a wire core (43) surrounding the welding wire (13) being arcuately arranged to lie freely in a free space (45) of the housing (42), wherein one end of the wire core (43) is fixed in an end region of the housing (42) and a measuring means (44) is provided to detect the deflection of the wire core (43), **characterized in that** the wire core (43) is displaceably mounted in a guide element (46) on the opposite end region, and that two coupling mechanisms (48, 49) for connection with a wire guide hose (50) for the wire core (43) are arranged on the housing (42).

2. A welding wire storage device according to claim 1, **characterized in that** the coupling mechanisms (48, 49) are each designed as a quick-lock.

3. A welding wire storage device according to claim 1 or 2, **characterized in that** elements (51) for delimiting the maximum deflection of the wire core (43) are arranged in the housing (42).

4. A welding wire storage device according to any one of claims 1 to 3, **characterized in that** an element (57) for fastening the hose pack (23) is arranged on the opposite side of the free space (45) of the housing (42).

5. A welding wire storage device according to any one of claims 1 to 4, **characterized in that** the housing (42) is arranged between a welding apparatus (1) or wire feeder (11) and a welding torch (10), wherein the hose pack (23) is arranged directly, without interruption, between the welding apparatus (1) or wire feeder (11) and the welding torch (10), and wherein the wire core (43) is interrupted in the housing (42).

## Revendications

1. Dispositif de stockage de fil d'apport pour une installation de soudage, avec un boîtier (42), dans lequel une âme de fil (43) entourant le fil d'apport (13) est disposée librement en forme d'arc dans un espace libre (45) du boîtier (42), dans lequel une extrémité de l'âme de fil (43) est fixée dans une zone d'extrémité du boîtier (42), et dans lequel, pour détecter la déviation de l'âme de fil (43), il est disposé un moyen de mesure (44), **caractérisé en ce que** l'âme de fil (43) est supportée dans la zone d'extrémité opposée, de manière à coulisser dans un élément de guidage (46), et **en ce que** sur le boîtier (42) sont disposés deux dispositifs d'accouplement (48, 49) pour la liaison avec un tuyau de guidage de fil (50) pour l'âme de fil (43).

2. Dispositif de stockage de fil d'apport selon la revendication 1, **caractérisé en ce que** les dispositifs d'accouplement (48, 49) sont réalisés sous la forme d'une fermeture rapide.

3. Dispositif de stockage de fil d'apport selon la revendication 1 ou 2, **caractérisé en ce que** des éléments (51) sont disposés dans le boîtier (42) pour limiter la déviation maximale de l'âme de fil (43).

4. Dispositif de stockage de fil d'apport selon l'une quelconque des revendications 1 à 3, **caractérisé en ce que** sur le côté opposé de l'espace libre (45) du boîtier (42) est disposé un élément (57) pour fixer le paquet de tuyaux (23).

5. Dispositif de stockage de fil d'apport selon l'une quelconque des revendications 1 à 4, **caractérisé en ce que** le boîtier (42) est disposé entre un appareil de soudage (1) ou un dispositif de transport de fil (11) et un chalumeau de soudage (10), le paquet de tuyaux (23) étant disposé directement, sans sectionnement entre l'appareil de soudage (1) ou le dispositif de transport de fil (11) et le chalumeau de soudage (10), et l'âme de fil (43) étant sectionnée dans le boîtier (42).
